# FASCICULE DE BREVET EUROPEEN

(11) **EP 3 032 659 B1**
(45) Date de publication et mention de la délivrance du brevet: **22.11.2017**
(21) Numéro de dépôt: 15199011.6
(22) Date de dépôt: 10.12.2015
(51) Int. Cl.: H01R 13/703, H01R 13/627, H01R 13/713, B60L 11/18

(54) **SYSTÈME DE RACCORDEMENT D'UN CIRCUIT DE PUISSANCE ÉLECTRIQUE ET INSTALLATION DE CHARGE D'UN VÉHICULE ÉLECTRIQUE COMPRENANT UN TEL SYSTÈME DE RACCORDEMENT**
ANSCHLUSSSYSTEM EINES ELEKTRISCHEN LEISTUNGSSCHALTKREISES, UND ANLAGE ZUM AUFLADEN EINES ELEKTROFAHRZEUGS, DAS EIN SOLCHES ANSCHLUSSSYSTEM UMFASST
CONNECTING SYSTEM FOR AN ELECTRIC POWER SUPPLY CIRCUIT AND CHARGER DEVICE FOR AN ELECTRIC VEHICLE EQUIPPED WITH SUCH A SYSTEM

(30) Priorité: 11.12.2014 FR 1462220
(43) Date de publication de la demande: 15.06.2016
(73) Titulaire: Schneider Electric Industries SAS, 92500 Rueil-Malmaison (FR)
(72) Inventeur: BURNOT, Claude, 38050 GRENOBLE Cedex 09 (FR); FAURES FUSTEL DE COULANGES, Adrien, 38050 GRENOBLE Cedex 09 (FR); MARCHESI, Diego, 38050 GRENOBLE Cedex 09 (IT)
(74) Mandataire: Lavoix

(56) Documents cités:
- EP-A1- 2 712 761
- JP-A- 2014 120 233
- US-A1- 2014 170 890

## Description

La présente invention concerne un système de raccordement d'un circuit de puissance électrique, ainsi qu'une installation de charge d'un véhicule électrique comprenant un tel système de raccordement.

Dans le domaine des véhicules électriques, il est connu de charger électriquement un véhicule via une prise électrique, telle qu'une prise de type T2, qui vient se brancher sur une embase, telle qu'une embase de type T2, d'une borne de recharge. Lors d'une recharge électrique, un circuit de puissance électrique, inclus dans la borne de recharge, transmet un courant électrique au véhicule électrique via l'accouplement embase-prise. Lors d'une telle recharge, il est souhaitable d'empêcher le débrochage de la prise par rapport à l'embase de la borne, afin d'éviter le vieillissement prématuré des contacts du circuit de puissance dû aux arcs électriques générés lors d'une déconnexion sous charge. Pour ce faire, il est connu d'équiper la borne de recharge d'un dispositif de verrouillage fixé sur l'embase et connecté à une carte électronique de contrôle, ce dispositif ayant pour principale fonction d'empêcher un débrochage intempestif de cette prise et, le cas échéant, de mettre en défaut la borne de recharge.

A ce sujet, il est connu d'utiliser des systèmes électromécaniques où un verrou du dispositif de verrouillage est piloté par un électroaimant, soit à la connexion soit à la déconnexion. Il est également connu d'équiper la borne de recharge d'un barillet à clé afin d'empêcher le vol de la prise en cours de charge, l'arrêt de la charge en cours ou une tentative d'embrochage de la prise lorsque la borne est verrouillée ou au repos. Une telle approche implique la présence d'une partie mécanique et d'une partie électrique, ce qui augmente la complexité de mise en oeuvre du système et son coût de production. De plus, en cas de perte de tension, la prise mâle reste prisonnière dans la prise femelle. Une telle approche exige une embase instrumentée, ce qui nécessite une carte électronique plus grande, équipée d'un nombre supérieur d'entrées et sorties et donc plus chère.

C'est à ces inconvénients qu'entend plus particulièrement remédier l'invention en proposant un nouveau système de raccordement d'un circuit de puissance électrique dont le dispositif de verrouillage est plus simple à utiliser et moins coûteux que ceux de l'art antérieur puisque équipé d'une carte électronique avec un nombre d'entrées et sorties limité.
Les documents EP2712761A1, US2014/170890A et JP2014120233A divulguent aussi des systèmes de raccordement de circuit de puissance électrique. L'invention concerne un système de raccordement d'un circuit de puissance électrique tel que défini par l'objet de la revendication 1. Ce système comprend une prise mâle et une prise femelle aptes à transmettre un courant électrique lorsque la prise mâle est en place dans la prise femelle. Le système comprend également un circuit de communication électrique entre les prises mâle et femelle et un dispositif de verrouillage commutable entre une première configuration de verrouillage de la prise mâle dans la prise femelle et une deuxième configuration de libération de la prise mâle. Conformément à l'invention, le dispositif de verrouillage comprend un verrou mobile entre une première position, correspondant à la première configuration de verrouillage, et une deuxième position, correspondant à la deuxième configuration de libération. Le dispositif de verrouillage comprend également un levier de commande du verrou, mobile entre une première position et une deuxième position. Le dispositif de verrouillage comprend enfin un premier interrupteur du circuit de communication, configuré pour commuter entre une configuration de circuit fermé et une configuration de circuit ouvert en fonction de la position du verrou, et un deuxième interrupteur du circuit de communication, configuré pour commuter entre une configuration de circuit fermé et une configuration de circuit ouvert en fonction de la position du levier de commande.

Grâce à l'invention, le dispositif de verrouillage est essentiellement mécanique et donc plus robuste. Le verrouillage et le déverrouillage de la prise mâle comportent seulement le déplacement d'un verrou et d'un levier. De plus, en cas de perte de tension, la prise mâle ne reste pas prisonnière de la prise femelle et le véhicule électrique est donc libéré. Un tel dispositif de verrouillage a un encombrement minimum sur la carte électronique puisque chaque interrupteur n'a besoin que d'une seule entrée.

Selon des aspects avantageux de l'invention, un tel système de raccordement comprend une ou plusieurs des caractéristiques suivantes, prises selon toute combinaison techniquement admissible :
- Le système de raccordement comprend en outre un loquet commandé par une clé et commutable entre une première position de blocage du dispositif de verrouillage et une deuxième position de libération du dispositif de verrouillage.
- Le système de raccordement comprend un troisième interrupteur d'une carte électronique de contrôle du circuit de puissance électrique, le troisième interrupteur étant configuré pour commuter la carte électronique entre une configuration d'activation et une configuration d'inhibition, en fonction de la position du loquet.
- Dans sa première position de blocage, le loquet empêche un déplacement du levier de commande et du verrou, le verrou étant bloqué dans sa première position de verrouillage.
- Le verrou est configuré pour être déplacé de sa première position vers sa deuxième position par la prise mâle.
- Le dispositif de verrouillage comprend au moins un ressort configuré pour rappeler élastiquement le verrou de sa deuxième position vers sa première position.
- Le verrou est mobile en translation entre ses première et deuxième positions.
- Le levier de commande est mobile en translation, selon un axe perpendiculaire à l'axe de translation du verrou.
- Le verrou est équipé d'au moins une came et le levier de commande est équipé d'au moins une came complémentaire en appui sur la came du verrou et une translation du levier entre ses première et deuxième positions entraîne une translation du verrou entre ses première et deuxième positions.

L'invention concerne également une installation de charge d'un véhicule électrique comprenant une borne de recharge incluant un circuit de puissance électrique et un système de raccordement tel que décrit ci-dessus entre une prise mâle et une prise femelle.

L'invention sera mieux comprise et d'autres avantages de celle-ci apparaîtront plus clairement à la lumière de la description qui va suivre d'un système de raccordement et d'une installation de charge d'un véhicule automobile conformes à l'invention, donnée uniquement à titre d'exemple non limitatif et faite en référence aux dessins annexés, sur lesquels :
- la figure 1 est une vue en perspective d'une installation de charge conforme à l'invention dont un capot d'une borne de recharge a été retiré ;
- la figure 2 est une vue en perspective d'une prise mâle et d'une prise femelle de la borne de recharge de l'installation de la figure 1 ;
- la figure 3 est une vue en perspective, selon un angle différent, de la prise femelle dont un capot a été retiré ;
- la figure 4 est une coupe, selon le plan IV à la figure 2, lorsque la prise mâle est en regard de la prise femelle, un verrou du dispositif de verrouillage étant dans une position de verrouillage et un loquet de la borne étant dans une position de libération ;
- la figure 5 est une coupe analogue à la figure 4 lorsque la prise mâle est en cours d'introduction dans la prise femelle et en appui du verrou et le loquet est dans sa position de libération ;
- la figure 6 est une vue à plus grande échelle de l'encadré VI à la figure 5 ;
- la figure 7 est une coupe analogue à la figure 4 lorsque la prise mâle est en place dans la prise femelle, le verrou étant dans sa position de verrouillage ;
- la figure 8 est une coupe analogue à la figure 4 lorsqu'un levier du dispositif de verrouillage déplace le verrou dans sa position de libération ;
- la figure 9 est une vue à plus grande échelle et avec arrachement partiel de l'encadré IX à la figure 8 ;
- la figure 10 est une vue en perspective analogue à la figure 2 lorsque la prise mâle est en place dans la prise femelle et le loquet est dans sa position de blocage ;
- la figure 11 est une coupe, selon le plan XI à la figure 10, lorsque le loquet est dans sa position de blocage, au cours d'une tentative de débrochage ; et
- la figure 12 est une coupe analogue à la figure 11 lorsque le loquet est dans sa position de blocage, au cours d'une tentative d'embrochage.

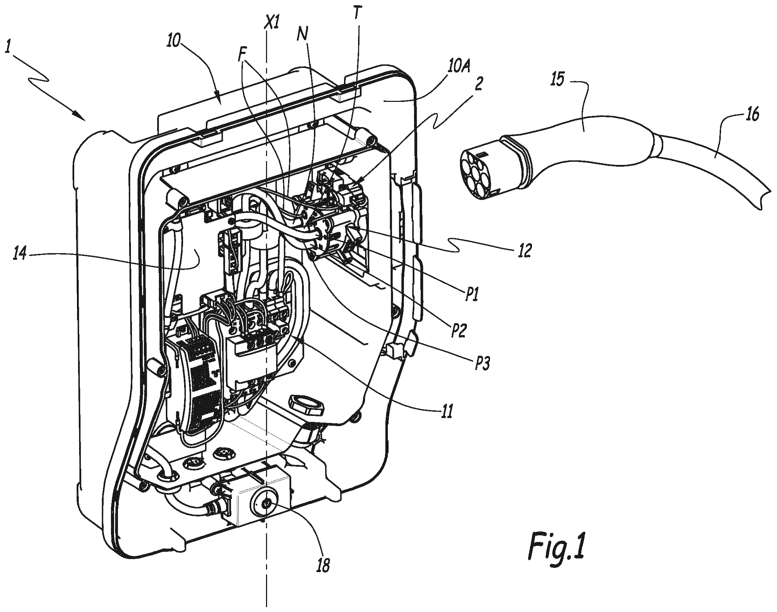

A la figure 1, une installation 1 de charge d'un véhicule électrique est représentée. On note X1 un axe vertical de l'installation 1 qui est fixe et qui constitue un axe longitudinal pour certains éléments de l'installation 1.

L'installation 1 est équipée d'une borne de recharge 10 dont un capot latéral est omis à la figure 1, pour la clarté du dessin. La borne de recharge 10 comprend un circuit de puissance électrique 11 et un système de raccordement 100 du circuit 11 à un câble électrique 16.

Le système de raccordement 100 comprend une prise femelle 12, telle qu'une embase de type T2, une prise mâle 15, notamment de type T2, dans l'exemple raccordée à un véhicule automobile non représenté, par un câble multiconducteur 16. Le système 100 comprend, en outre, un circuit de communication électrique entre, d'une part, une carte électronique 14 intégrée à la borne de recharge 10 et, d'autre part, le véhicule automobile. Le circuit de communication est commutable entre une configuration fermée, lorsque la prise mâle 15 est en place dans la prise femelle 12, et une configuration ouverte, lorsque la prise mâle 15 n'est pas en place.

La prise femelle 12 est positionnée dans une paroi latérale 10A de la borne 10. On note 13 une niche de la prise femelle 12 ouverte vers l'extérieur de la paroi 10A. En pratique, la prise femelle 12 réalise une voie de liaison électrique entre l'intérieur et l'extérieur de la borne de recharge 10. On note également 120 une surface supérieure de la prise femelle 12 qui est sensiblement perpendiculaire à l'axe X1. Sur cette surface 120 est ménagé un alésage 122 qui met la niche 13 en communication avec l'intérieur de la borne 10. La prise femelle 12 est reliée électriquement au circuit de puissance 11 via trois conducteurs électriques de puissance P1, P2 et P3. En particulier, chaque conducteur P1, P2 ou P3 est adapté pour transmettre une phase correspondante d'un courant électrique. La prise femelle 12 est reliée également à un conducteur N pour le neutre et à un conducteur T pour la masse électrique. De plus, la prise femelle 12 est raccordée à deux fils pilotes F.

La borne de recharge 10 comprend également un interrupteur général 18 configuré pour activer ou désactiver la borne de recharge 10 et, par conséquent, la transmission du courant électrique.

La carte électronique 14 exerce une action de contrôle sur le circuit de puissance électrique 11 et reçoit une information concernant la continuité du circuit de communication. La carte électronique 14 est également commutable entre une configuration d'activation, où l'interrupteur général 18 est actif et peut interrompre la charge et une configuration d'inhibition, où l'interrupteur général 18 est inhibé en ne peut pas interrompre la charge.

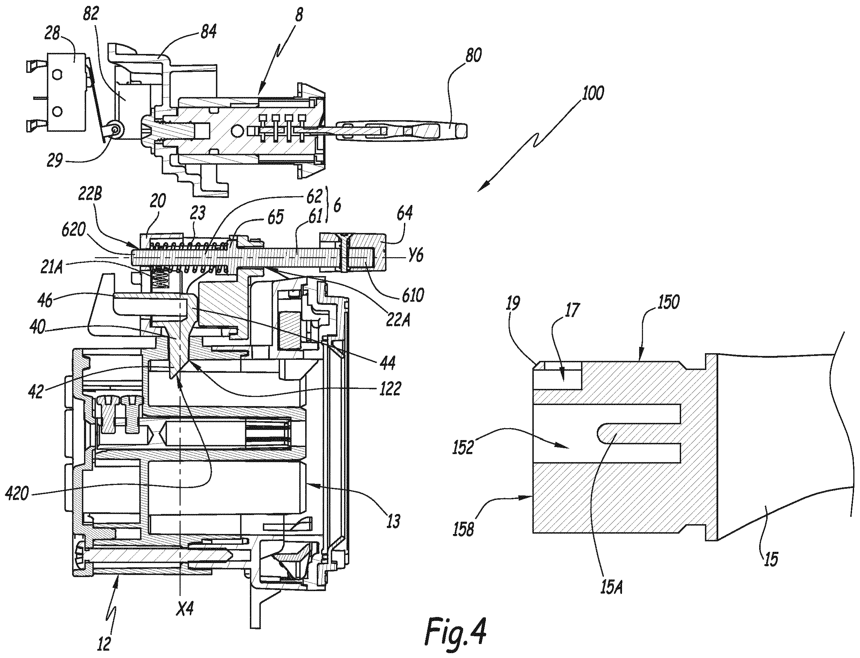

La prise femelle 12 de la borne 10 est configurée pour accueillir dans sa niche 13 la prise mâle 15 et réaliser l'accouplement électrique entre les conducteurs précités P1, P2, P3, N et T et des contacts correspondants de la prise mâle 15 qui sont disposés dans des logements 151, 152, 153, 154 et 155 de cette prise et dont un est représenté schématiquement à la figure 4, avec la référence 15A. De façon connue en soi, chaque contact est relié électriquement à un conducteur électrique. Au total, la prise mâle 15 est équipée de trois conducteurs pour les trois phases, un conducteur pour le neutre et un conducteur pour la masse électrique ou la terre. Ces conducteurs de la prise mâle 15 sont réunis en faisceaux au sein du câble 16 configuré pour relier la prise mâle 15 à un véhicule électrique, qui n'est pas représenté sur les figures. La prise mâle 15 comprend aussi deux logements 156 et 157 configurés pour loger des contacts associés aux fils pilotes F de la prise femelle 12. On note 150 une surface supérieure de la prise mâle 15 qui est sensiblement perpendiculaire à l'axe X1. La prise 15 est pourvue d'une niche 17 au niveau de la surface 150. On note 19 un chanfrein ménagé au niveau d'une arête de jonction entre la surface 150 et une face avant 158 de la prise mâle 15 dans laquelle débouchent les logements 151 à 157.

En pratique, la fermeture du circuit de communication électrique est réalisée lorsque des fiches non représentées et reliées aux fils pilotes F de la prise 12 sont reçus dans les logements 156 et 157 de la prise mâle 15 et reliées à d'autres fiches non représentées comprises dans la prise mâle 15. Les fils pilotes F appartiennent au circuit de communication. Le circuit de communication est ainsi appelé « le circuit des fils pilotes F ». Lorsque le circuit des fils pilotes F est fermé, la carte électronique 14 assure la fermeture du circuit de puissance 11. Au contraire, lorsque le circuit du fil pilote F est ouvert, la carte électronique 14 provoque l'ouverture du circuit de puissance 11.

La continuité du circuit de communication entre le véhicule électrique et la carte électronique est assurée, en particulier, par la jonction des deux prises 12 et 15.

Le système de raccordement 100 comprend également un dispositif de verrouillage 2 commutable entre une première configuration de verrouillage de la prise mâle 15 dans la prise femelle 12 et une deuxième configuration de libération de la prise mâle 15. Le dispositif de verrouillage 2 comprend un capot externe 20 qui entoure plusieurs éléments internes du dispositif 2.

Le dispositif de verrouillage 2 comprend, à l'intérieur du capot 20, un verrou 4 mobile en translation, selon un axe X4 sensiblement parallèle à l'axe X1, entre une première position, correspondant à la première configuration de verrouillage du dispositif de verrouillage 2, et une deuxième position, correspondant à la deuxième configuration de libération du dispositif de verrouillage 2. Le verrou 4 comprend un corps 40 agencé dans l'alésage 122 de la prise femelle 12. Le corps 40 est pourvu d'une extrémité 42 équipée d'une surface 420 inclinée, notamment à 45°, par rapport à l'axe de translation X4 du verrou 4. Le verrou 4 comprend également une plateforme 44 solidaire du corps 40. La plateforme 44 comprend deux logements 45A et 45B configurés pour recevoir en appui chacun un ressort 21A et 21B du dispositif de verrouillage 2. Les ressorts 21A et 21B sont en appui contre le capot 20 du dispositif de verrouillage 2. La plateforme 44 du verrou 4 comprend également deux cames 48 arrondies. Le verrou 4 comprend enfin une patte 46 en saillie par rapport à la plateforme 44, sensiblement perpendiculaire à l'axe X4.

Le dispositif de verrouillage 2 comprend également un levier 6 de commande du verrou 4, mobile en translation, selon un axe Y6 sensiblement perpendiculaire à l'axe X4, entre une première position de repos et une deuxième position d'actionnement du verrou 4. Le levier de commande 6 comprend une tige 60, laquelle est agencée partiellement à l'intérieur de la borne de recharge 10. Plus précisément, on note 61 une portion de la tige 60 qui reste à l'extérieur de la borne de recharge 10. La portion 61 de la tige 60 est équipée, à une extrémité 610, d'un poussoir 64. On note 62 une portion de la tige 60 qui est à l'intérieur de la borne de recharge 10 et est agencée dans le capot 20 du dispositif de verrouillage 2 via un premier alésage 22A et un deuxième alésage 22B, ces alésages étant formés dans une partie fixe du dispositif de verrouillage 2. La portion 62 de la tige 60 est équipée d'une collerette 65 qui est en contact avec un ressort 23 en appui contre le capot 20. De plus, on note 620 une extrémité de la portion 62 qui est agencée dans le deuxième alésage 22B du capot 20 et est positionnée à l'extérieur du capot 20.

Le levier 6 est équipé, de part et d'autre de sa tige 60, selon l'axe de translation Y6, de deux cames 66 configurées pour être en appui contre les cames 48 du verrou 4 et complémentaires de ces cames. Le levier de commande 6 est également équipé d'une patte 68 en saillie, par rapport au reste du levier 6, sensiblement perpendiculairement aux axes X4 et Y6.

Le dispositif de verrouillage 2 comprend également un premier interrupteur 24 du circuit de communication. Le premier interrupteur 24 comprend un bouton d'actionnement 25 disposé pour être en contact avec la patte 46 du verrou 4. Le bouton d'actionnement 25 est disposé pour commuter le premier interrupteur 24 entre une configuration où le circuit de communication est fermé et une configuration où le circuit de communication est ouvert, en fonction de la position du verrou 4.

Le dispositif de verrouillage 2 comprend également un deuxième interrupteur 26 du circuit de communication. Le deuxième interrupteur 26 est pourvu d'un bouton d'actionnement 27 configuré pour être en contact avec la patte 68 du levier de commande 6. Le bouton d'actionnement 27 est disposé pour commuter le deuxième interrupteur 26 entre une configuration où le circuit de communication est fermé et une configuration où le circuit de communication est ouvert, en fonction de la position du levier de commande 6. Comme décrit ci-dessus, selon la configuration du circuit de communication, la carte électronique 14 provoque la fermeture ou l'ouverture du circuit de puissance 11.

Selon un aspect optionnel de l'invention, le système de raccordement 100 comprend également un loquet 8, disposé au-dessus du dispositif de verrouillage 2 selon l'axe X1 de l'installation 1. Le loquet 8 est commandé par une clé 80. Il est commutable entre une première position de blocage du dispositif de verrouillage 2 et une deuxième position de libération du dispositif de verrouillage 2. Plus particulièrement, le loquet 8 est équipé d'une palette 82 et d'une patte 84 et il est apte à déplacer ces deux éléments en même temps entre ses première et deuxième positions. La palette 82 est configurée pour venir en contact, lorsque le loquet 8 est dans sa première position de blocage, avec l'extrémité 620 de la portion 62 de la tige 60 du levier de commande 6 et avec la patte 46 du verrou 4.

Le système de raccordement 100 comprend également un troisième interrupteur 28 de la carte électronique 14. Le troisième interrupteur 28 est équipé d'un bouton d'actionnement 29 configuré pour commuter la carte électronique 14 entre ses configurations d'activation et d'inhibition de l'interrupteur général 18, en fonction de la position du loquet 8. La patte 84 du loquet 8 est configurée pour venir au contact du bouton d'actionnement 29 du troisième interrupteur 28.

Le fonctionnement du système de raccordement 100 est le suivant :
Lorsque la borne de recharge 10 de l'installation 1 est en configuration active, le loquet 8 est dans sa position de libération du dispositif de verrouillage 2. Les premier et deuxième interrupteurs 24 et 26 maintiennent le circuit de communication dans sa configuration fermée et le troisième interrupteur 28 maintient la carte électronique 14 dans sa configuration d'activation de l'interrupteur général 18.

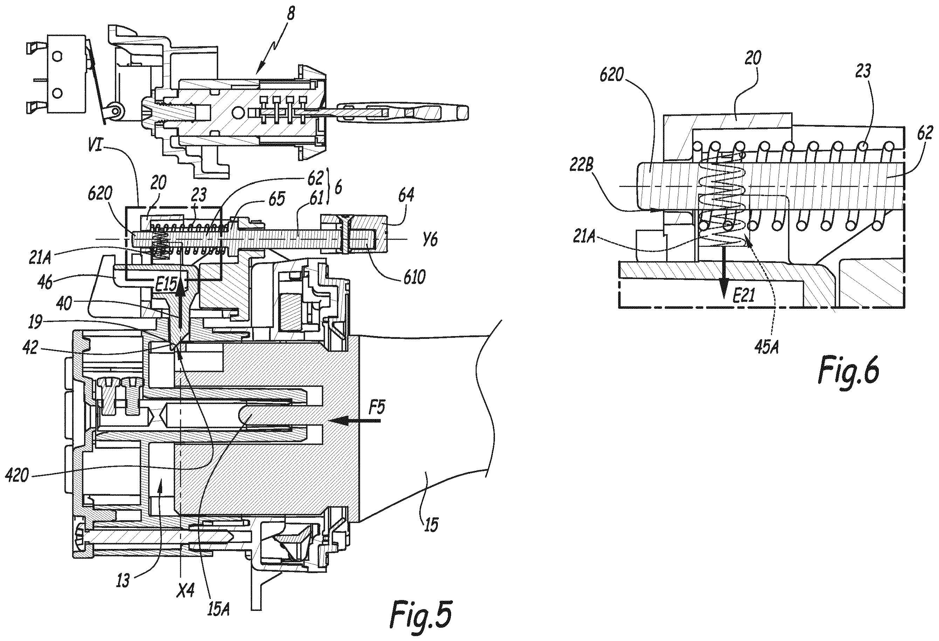

Un utilisateur peut introduire manuellement la prise mâle 15 dans la prise femelle 12. Comme représenté à la figure 5, la prise mâle 15 est mise en translation par l'utilisateur selon une direction représentée par la flèche F5 et parallèle à l'axe Y6, jusqu'à ce que le chanfrein 19 de la surface 150 de la prise mâle 15 vienne en appui contre la surface inclinée 420 de l'extrémité 42 du verrou 4. La translation de la prise mâle 15 selon la flèche F5 induit alors un effort E15 via le chanfrein 19 sur le verrou 4.

Grâce aux géométries de la surface 420 et du chanfrein 19, l'effort E15 produit est parallèle à l'axe de translation X4 du verrou 4 et pousse le verrou 4 qui se déplace, le long de l'axe X4, vers le haut de la figure 5. En d'autres termes, l'effort E15 de la prise mâle déplace le verrou 4 de sa première position de verrouillage vers sa deuxième position de libération. L'effort E15 de la prise mâle 15 pousse ainsi la plateforme 44 du verrou 4 à comprimer les ressorts 21A et 21B du dispositif de verrouillage 2. Ces ressorts 21A et 21B exercent alors des efforts E21 qui ont une direction parallèle à l'axe X4 du verrou 4 et qui sont opposés à l'effort E15 de la prise mâle 15. Toutefois, l'effort E15 est supérieur aux efforts E21 des ressorts 21A et 21B et le verrou 4 continue son déplacement, de sa position de verrouillage vers sa position de libération.
Le déplacement du verrou 4 de sa position de verrouillage vers sa position de libération pousse en outre la patte 46 en appui contre le bouton d'actionnement 25. Comme expliqué ci-dessus, le premier interrupteur 24 commute alors le circuit de communication de sa configuration fermée vers sa configuration ouverte. En pratique dans cette configuration active de la borne, le dispositif de verrouillage 2, et plus particulièrement le verrou 4, permet l'embrochage de la prise mâle 15 dans la prise femelle 12, en toute sécurité pour l'utilisateur puisque le circuit de communication est ouvert et par conséquent la carte électronique 14 a provoqué l'ouverture du circuit de puissance 11.

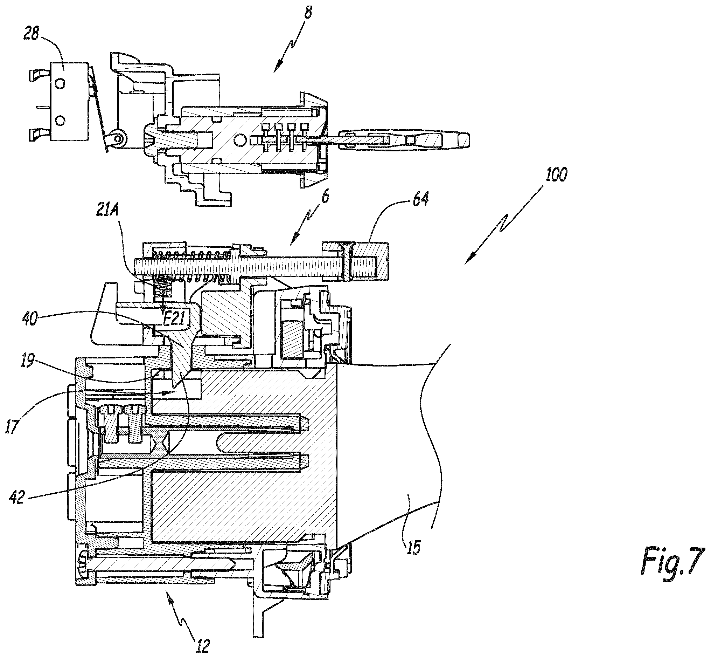

Une translation supplémentaire dans le sens de la flèche F5, amène la prise mâle 15 à être complètement en place dans la prise femelle 12, les conducteurs P1, P2, P3, N et T de la prise femelle 12 étant alors reliés électriquement aux contacts correspondants de la prise mâle 15. Le verrou 4, qui était dans sa position de libération, est maintenant en vis-à-vis de la niche 17 de la prise mâle 15. En d'autres termes, l'extrémité 42 n'est plus en contact avec la surface 150 et la prise mâle 15 n'exerce plus aucun effort sur l'extrémité 42 du verrou 4. Par ailleurs, le verrou 4 reste soumis aux efforts E21 des ressorts 21A et 21B et donc se déplace de sa position de libération vers sa position de verrouillage. Le corps 40 du verrou 4 vient alors s'agencer dans la niche 17 de la prise mâle 15, comme représenté à la figure 7.

Lorsque le verrou 4 descend de sa position de libération vers sa position de verrouillage, la patte 46 relâche le bouton d'actionnement 25, ce qui permet au premier interrupteur 24 de commuter le circuit de communication de sa configuration ouverte vers sa configuration fermée. En d'autres termes, lorsque le corps 40 du verrou 4 est agencé dans la niche 17, la prise mâle 15 étant en place dans la prise femelle 12, la borne de recharge 10 est adaptée pour transmettre le courant électrique via le circuit de puissance 11. La recharge électrique du véhicule électrique, peut alors commencer.

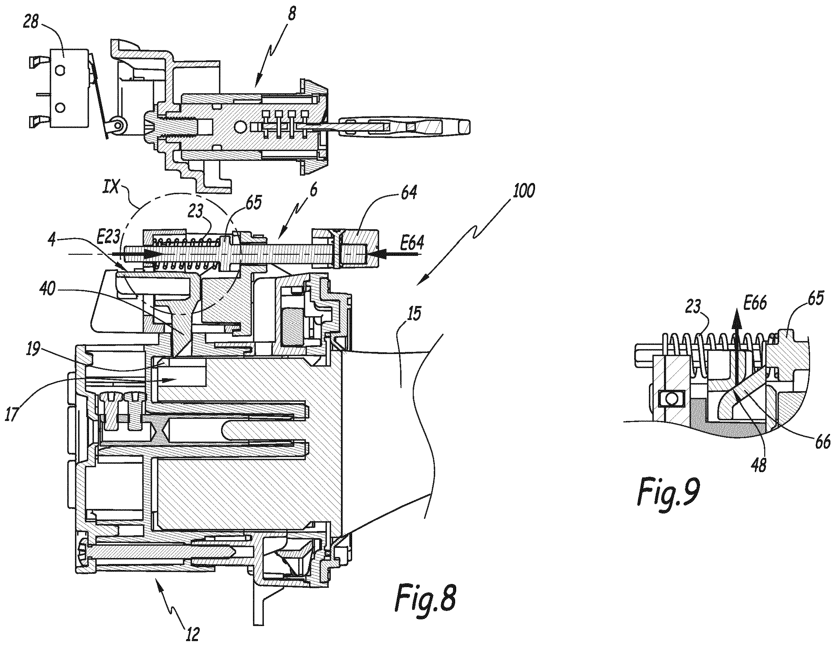

Une fois la charge terminée, afin de décrocher la prise mâle 15 en toute sécurité, l'utilisateur exerce un effort E64 sur le poussoir 64 du levier 6, comme représenté à la figure 8. L'effort E64 met en translation, selon l'axe de translation Y6, le levier 6 de sa première position vers sa deuxième position. Dans ses premiers millimètres de déplacement, le levier 6 porte sa patte 68 en appui contre le bouton d'actionnement 27 du deuxième interrupteur 26. Comme décrit ci-dessus, le deuxième interrupteur 26 provoque l'ouverture du circuit de communication et ensuite la carte électronique 14 provoque l'ouverture du circuit de puissance 11. Le déplacement successif du levier 6 le long de l'axe Y6 pousse les cames 66 en appui contre les cames 48 du verrou 4, comme représenté à la figure 9. Le levier 6 exerce via les cames 66 un effort E66 sur les cames 48 du verrou 4. Grâce aux géométries des cames 48 et 66, l'effort E66 est parallèle à l'axe de translation X4 et est dirigé vers le haut de la figure 9. En d'autres termes, les cames 66 du levier 6 provoquent le déplacement du verrou 4 de sa première position de verrouillage, où l'extrémité 42 est agencée dans la niche 17 de la prise mâle 15, vers sa deuxième position de libération, où l'extrémité 42 n'est plus agencée dans la niche 17.

Comme décrit ci-dessus, le déplacement du verrou 4 de sa position de verrouillage vers sa position de libération pousse la patte 46 en appui contre le bouton 25 du premier interrupteur 24. Le premier interrupteur 24 provoque aussi l'ouverture du circuit de communication.

En pratique, en appuyant sur le poussoir 64 du levier 6, l'utilisateur assure conjointement la libération de la prise mâle 15 et l'ouverture du circuit de communication via les interrupteurs 24 et 26. Le débrochage de la prise mâle 15 de la prise femelle 12 peut alors être effectué en toute sécurité.

Lorsque le levier 6 est déplacé par l'utilisateur, il va comprimer par l'intermédiaire de sa collerette 65 le ressort 23 du dispositif de verrouillage 2. Un effort E23 vient alors s'opposer à l'effort E64 exercé par l'utilisateur. Une fois la prise mâle 15 débrochée, l'utilisateur relâche le poussoir 64 et l'effort E23 repousse le levier 6 de sa deuxième position vers sa première position. Alors, la patte 68 relâche le bouton d'actionnement 27 et le deuxième interrupteur 26 commute le circuit de communication de la configuration ouverte vers la configuration fermée. En outre, les cames 66 du levier 6 ne sont plus en appui des cames 48 du verrou 4. Le verrou 4 se déplace de sa deuxième position de libération vers sa première position de verrouillage et, par voie de conséquence, le premier interrupteur 24 commute lui aussi le circuit de communication vers la configuration fermée.

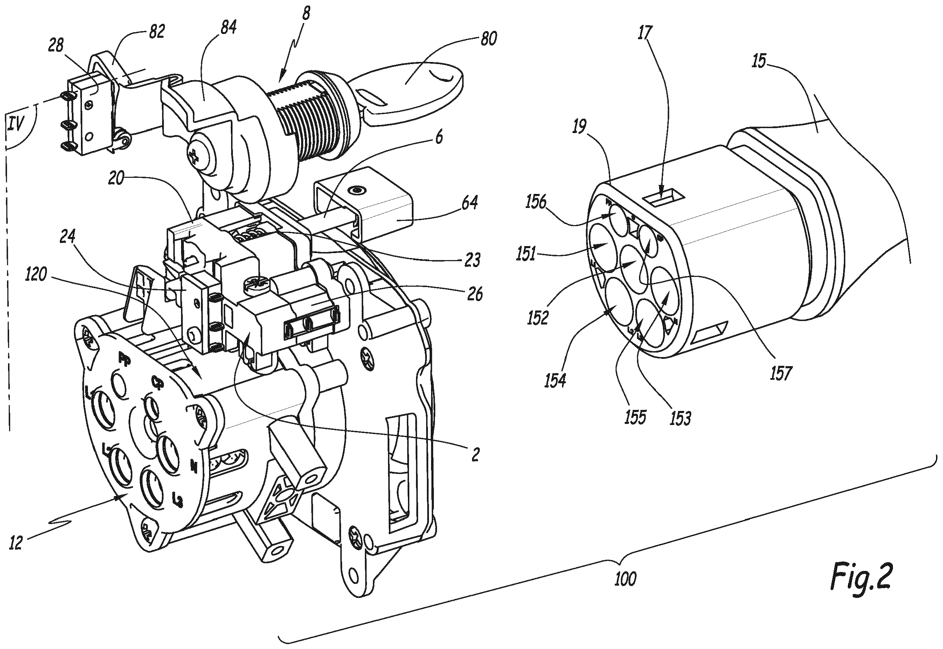

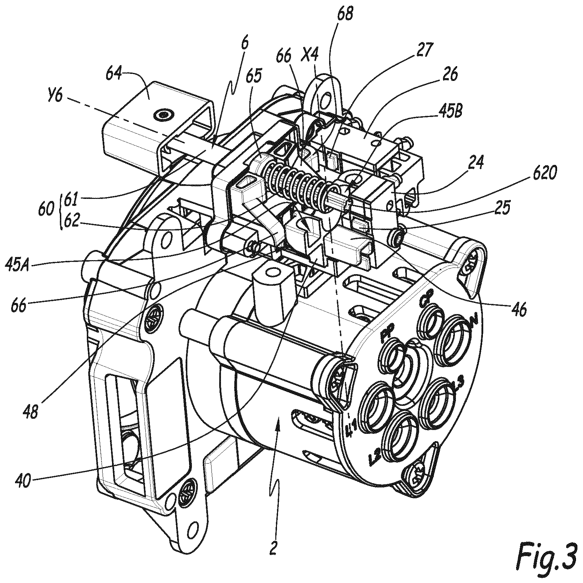

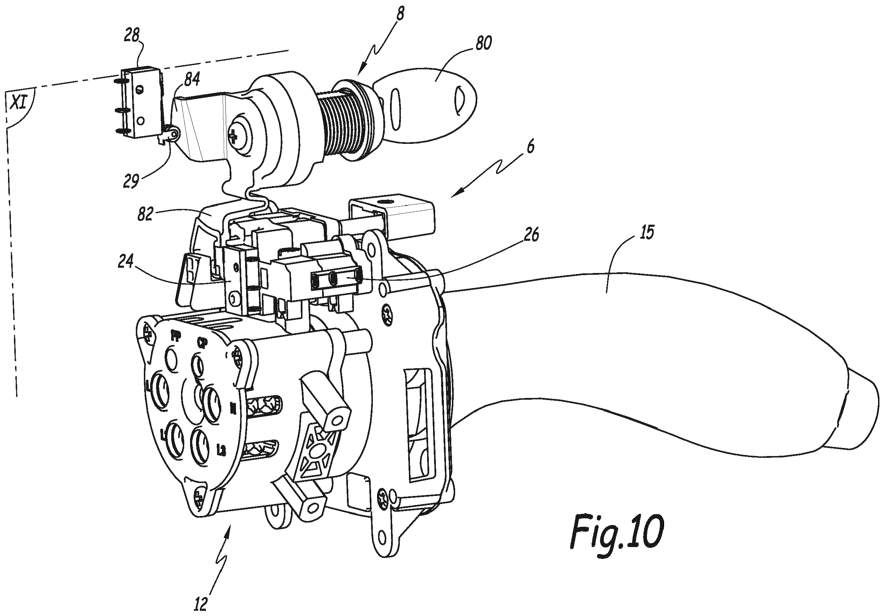

Sur les figures 2 à 5, 7 et 8, le loquet 8 est représenté en configuration de libération. Au contraire, sur les figures 10 à 12, l'utilisateur, qui dispose de la clé 80, a commuté le loquet 8 de sa configuration de libération vers sa configuration de blocage. Cela induit un déplacement de la palette 82 et de la patte 84 du loquet 8. En particulier, comme représenté aux figures 10 à 12, la palette 82 vient se positionner, le long de l'axe Y6, en contact avec l'extrémité 620 du levier 6 et, le long de l'axe X4, en contact avec la patte 46 du verrou 4. En pratique, la palette 82 bloque le levier 6 et le verrou 4 qui ne sont plus capables de se déplacer le long de leurs axes respectifs de translation.

En outre, la patte 84 du loquet 8 vient en appui contre le bouton d'actionnement 29 du troisième interrupteur 28. Le troisième interrupteur 28 commute alors la carte électronique 14 de sa configuration d'activation vers sa configuration d'inhibition. Comme décrit ci-dessus, l'interrupteur général 18 est inhibé et ne peut pas interrompre la charge. En pratique, lorsque le loquet 8 est dans sa position de blocage, l'utilisateur ne peut pas arrêter la recharge en appuyant sur l'interrupteur général 18 qui est désactivé par la car la carte électronique 14.

De plus, dans cette position de blocage du loquet 8, l'utilisateur ne peut non plus débrocher la prise mâle 15 comme décrit ci-dessus. En effet, même en appuyant sur le poussoir 64 du levier 6, le levier 6 est bloqué en translation le long de l'axe Y6 par la palette 82 et donc ne peut pas déplacer le verrou 4 de sa position de verrouillage vers sa position de libération. Ainsi, la prise mâle 15 est verrouillée dans la prise femelle 12 et la recharge du véhicule continue, indépendamment des actions de l'utilisateur, tant que celui-ci ne manoeuvre pas le loquet 8 avec la clef 80.

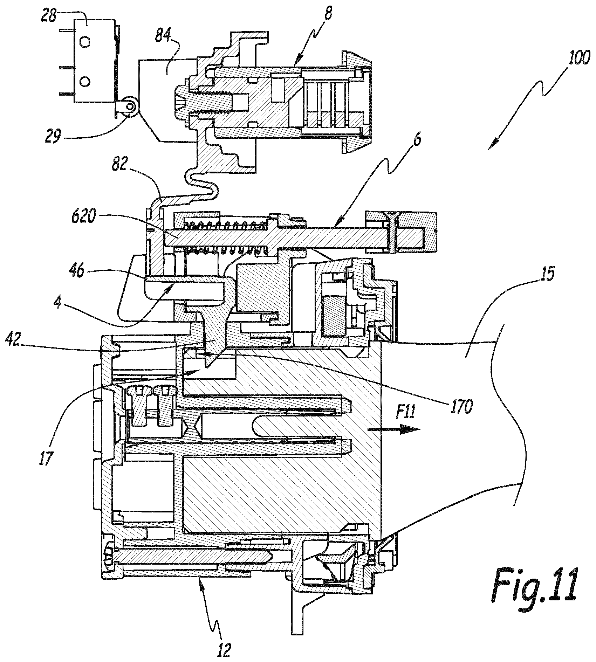

Comme représenté à la figure 11, lorsque le loquet 8 est dans sa position de blocage, si l'utilisateur essaie de débrocher la prise mâle 15, il trouve le verrou 4 dans sa position de verrouillage, l'extrémité 42 étant agencée dans la niche 17 de la prise mâle 15. Dans le cas où l'utilisateur essaie également d'extraire la prise mâle 15 en tirant dans le sens de la flèche F11, l'extrémité 42 du verrou 4 vient en appui d'une paroi 170 de la niche 17, en empêchant le débrochage. En pratique, dans sa position de blocage, le loquet 8 assure la fonction d'antivol de la prise mâle 15.

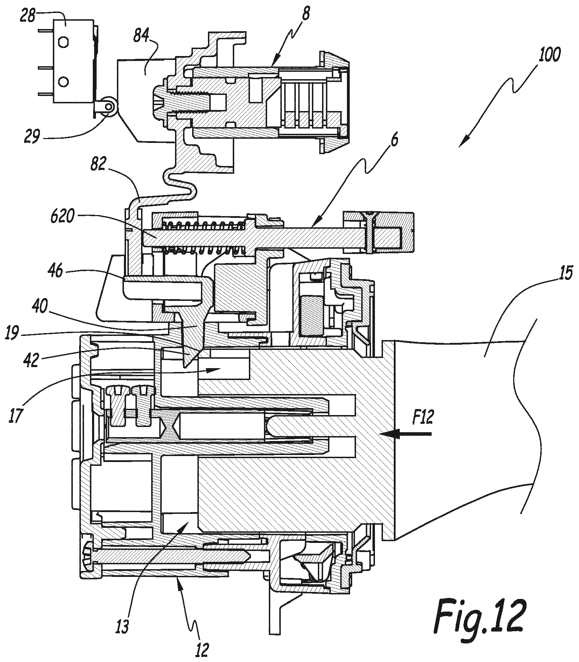

Comme représenté à la figure 12, lorsque le loquet 8 est dans sa position de blocage, puisque la borne de recharge 10 est verrouillée ou au repos, l'embrochage de la prise mâle 15 est impossible. Si l'utilisateur essaie également d'introduire complétement la prise mâle 15 dans la niche 13, dans le sens de la flèche F12, un embrochage complet de la prise 15 est impossible car le verrou 4 ne peut pas être déplacé de sa position de verrouillage vers sa position de libération. En effet, le chanfrein 19 vient en appui contre la surface inclinée 420 de l'extrémité 42 qui représente dans cette configuration un obstacle incontournable et non déplaçable.

## Revendications

1. Système de raccordement (100) d'un circuit de puissance électrique (11) pour charger des véhicules électriques, comprenant : une prise mâle (15) et une prise femelle (12) aptes à transmettre un courant électrique de puissance grâce à l'accouplement électrique entre les conducteurs (P1, P2, P3, N, T) de la prise femelle (12) et des contacts correspondants (15A) de la prise mâle (15), lorsque la prise mâle (15) est en place dans la prise femelle (12), le système (100) comprenant également un circuit de communication électrique entre les prises mâle et femelle dont la fermeture est réalisée par la liaison entre une fiche de la prise mâle (15) et une fiche de la prise femelle (12) lorsque la prise mâle (15) est en place dans la prise femelle (12),
le système (100) comprenant en outre, un dispositif de verrouillage (2) commutable entre une première configuration de verrouillage de la prise mâle dans la prise femelle et une deuxième configuration de libération de la prise mâle, le dispositif de verrouillage (2) comprenant :
- un verrou (4) mobile entre une première position, correspondant à la première configuration de verrouillage, et une deuxième position, correspondant à la deuxième configuration de libération,
- un levier (6) de commande du verrou, mobile entre une première position et une deuxième position,
- un premier interrupteur (24) du circuit de communication, configuré pour commuter entre une configuration de circuit fermé et une configuration de circuit ouvert, en fonction de la position du verrou (4),
- un deuxième interrupteur (26) du circuit de communication, configuré pour commuter entre une configuration de circuit fermé et une configuration de circuit ouvert, en fonction de la position du levier de commande (6),
le système (100) étant **caractérisé en ce que** :
- le verrou (4) est mobile en translation entre ses première et deuxième positions,
- le levier de commande (6) est mobile en translation, selon un axe (Y6) perpendiculaire à l'axe de translation (X4) du verrou (4),
- le verrou (4) est équipé d'au moins une came (48) et le levier de commande (6) est équipé d'au moins une came complémentaire (66) en appui sur la came du verrou et
- une translation du levier (6) entre ses première et deuxième positions entraîne une translation du verrou (4) entre ses première et deuxième positions.

2. Système (100) selon la revendication 1, **caractérisé en ce qu'**il comprend en outre un loquet (8) commandé par une clé (80) et commutable entre une première position de blocage du dispositif de verrouillage (2) et une deuxième position de libération du dispositif de verrouillage.

3. Système (100) selon la revendication 2, **caractérisé en ce qu'**il comprend un troisième interrupteur (28) d'une carte électronique (14) de contrôle du circuit de puissance électrique (11), le troisième interrupteur étant configuré pour commuter la carte électronique entre une configuration d'activation et une configuration d'inhibition, en fonction de la position du loquet (8).

4. Système (100) selon les revendications 2 ou 3, **caractérisé en ce que**, dans sa première position de blocage, le loquet (8) empêche un déplacement du levier (6) de commande et du verrou (4), le verrou (4) étant bloqué dans sa première position de verrouillage.

5. Système (100) selon l'une des revendications précédentes, **caractérisé en ce que** le verrou (4) est configuré pour être déplacé de sa première position vers sa deuxième position par la prise mâle (15).

6. Système (100) selon l'une des précédentes revendications, **caractérisé en ce que** le dispositif de verrouillage (2) comprend au moins un ressort (21A, 21B) configuré pour déplacer le verrou (4) de sa deuxième position vers sa première position.

7. Installation (1) de charge d'un véhicule électrique comprenant une borne de recharge (10) incluant un circuit de puissance électrique (11) et un système de raccordement (100) entre une prise mâle (15) et une prise femelle (12), **caractérisée en ce que** le système de raccordement (100) est selon l'une des revendications précédentes.

## Patentansprüche

1. System zum Anschluss (100) eines elektrischen Hauptstromkreises (11) zum Laden von elektrischen Fahrzeugen, aufweisend: einen Stecker (15) und eine Buchse (12), die in der Lage sind, einen elektrischen Hauptstrom zu übertragen in Folge der elektrischen Kopplung zwischen den Leitern (P1, P2, P3, N, T) der Buchse (12) und korrespondierenden Kontakten (15A) des Steckers (15), wenn der Stecker (15) in der Buchse (12) platziert ist, wobei das System (100) auch aufweist einen elektrischen Kommunikationsschaltkreis zwischen dem Stecker und der Buchse, dessen Schließen realisiert wird durch die Verbindung zwischen einer Karte der Buchse (15) und einer Karte des Steckers (12), wenn der Stecker (15) in der Buchse (12) platziert ist,
wobei das System (100) ferner aufweist eine Verriegelungsvorrichtung (2), die zwischen einer ersten Konfiguration zur Verriegelung des Steckers in der Buchse und einer zweiten Konfiguration zur Freigabe des Steckers umschaltbar ist, wobei die Verriegelungsvorrichtung (2) aufweist:
- einen Riegel (4), der zwischen einer ersten Position, die zu der ersten Konfiguration zur Verriegelung korrespondiert, und einer zweiten Position, die zu der zweiten Konfiguration zur Freigabe korrespondiert, bewegbar ist,
- einen Hebel (6), der zwischen einer ersten Position und einer zweiten Position bewegbar ist, zur Steuerung des Riegels,
- einen ersten Unterbrecher (24) des
Kommunikationsschaltkreises, konfiguriert zum Umschalten zwischen einer Schaltkreis-Geschlossen-Konfiguration und einer Schaltkreis-Geöffnet-Konfiguration in Abhängigkeit von der Position des Riegels (4),
- einen zweiten Unterbrecher (26) des
Kommunikationsschaltkreises, konfiguriert zum Umschalten zwischen einer Schaltkreis-Geschlossen-Konfiguration und einer Schaltkreis-Geöffnet-Konfiguration in Abhängigkeit von der Position des Steuer-Hebels (6),
wobei das System (100) **dadurch gekennzeichnet ist, dass**
- der Riegel (4) zwischen seiner ersten und seiner zweiten Position translationsbewegbar ist,
- der Steuer-Hebel (6) entlang einer Achse (Y6) senkrecht zu der Translationsachse (X4) des Riegels (4)
translationsbewegbar ist,
- der Riegel (4) mit wenigstens einem
Steuerberührungskontaktabschnitt (48) ausgestattet ist und der Steuer-Hebel (6) mit wenigstens einem komplementären Steuerberührungskontaktabschnitt (66) ausgestattet ist, der an dem Steuerberührungskontaktabschnitt des Riegels anliegt, und
- eine Translationsbewegung des Hebels (6) zwischen seiner ersten und seiner zweiten Position eine Translationsbewegung des Riegels (4) zwischen dessen ersten und dessen zweiten Position bewirkt.

2. System (100) gemäß Anspruch 1, **dadurch gekennzeichnet, dass** es ferner aufweist ein Schnappschloss (8), das von einem Schlüssel (80) gesteuert wird und das zwischen einer ersten Position zur Blockierung der Verriegelungsvorrichtung (2) und einer zweiten Position zur Freigabe der Verriegelungsvorrichtung umschaltbar ist.

3. System (100) gemäß Anspruch 2, **dadurch gekennzeichnet, dass** es einen dritten Unterbrecher (28) einer elektronischen Karte (14) zur Steuerung des elektrischen Hauptstromkreises (11) aufweist, wobei der dritte Unterbrecher konfiguriert ist zum Umschalten der elektronischen Karte zwischen einer Aktivierungs-Konfiguration und einer Unterbindungs-Konfiguration in Abhängigkeit von der Position des Schnappschlosses (8).

4. System (100) gemäß den Ansprüchen 2 oder 3, **dadurch gekennzeichnet, dass** das Schnappschloss (8), in seiner Position zur Blockierung, eine Verlagerung des Steuer-Hebels (6) und des Riegels (4) verhindert, wobei der Riegel (4) in seiner ersten Position zur Verriegelung blockiert ist.

5. System (100) gemäß irgendeinem der vorhergehenden Ansprüche, **dadurch gekennzeichnet, dass** der Riegel (4) konfiguriert ist, um mittels des Steckers (15) von seiner ersten Position zu seiner zweiten Position hin verlagert zu werden.

6. System (100) gemäß einem der vorhergehenden Ansprüche, **dadurch gekennzeichnet, dass** die Verriegelungsvorrichtung (2) wenigstens eine Feder (21A, 21B) aufweist, die konfiguriert ist zum Verlagern des Riegels (4) von seiner zweiten Position zu seiner ersten Position hin.

7. Einrichtung (1) zum Laden eines elektrischen Fahrzeugs, aufweisend einen Anschlusspunkt (10) mit einem elektrischen Hauptstromkreis (11) und einem System zum Anschluss (100) zwischen einem Stecker (15) und einer Buchse (12), **dadurch gekennzeichnet, dass** das System zum Anschluss (100) gemäß einem der vorhergehenden Ansprüche ist.

## Claims

1. Connecting system (100) for an electric power circuit (11) for charging electric vehicles, comprising: a male socket (15) and a female socket (12) which are capable of transmitting an electric power current by virtue of the electric coupling between the conductors (P1, P2, P3, N, T) of the female socket (12) and the corresponding contacts (15A) of the male socket (15) when the male socket (15) is in place in the female socket (12), the system (100) also comprising an electric communication circuit between the male and female sockets, closure of which circuit is effected by the connection between a plug of the male socket (15) and a plug of the female socket (12) when the male socket (15) is in place in the female socket (12),
the system (100) further comprising a locking device (2) which can be switched between a first configuration for locking the male socket in the female socket and a second configuration for releasing the male socket, the locking device (2) comprising:
- a lock (4) which is movable between a first position, corresponding to the first locking configuration, and a second position, corresponding to the second release configuration,
- a lever (6) for controlling the lock, which lever is movable between a first position and a second position,
- a first switch (24) of the communication circuit, which switch is configured to switch between a closed circuit configuration and an open circuit configuration according to the position of the lock (4),
- a second switch (26) of the communication circuit, which switch is configured to switch between a closed circuit configuration and an open circuit configuration according to the position of the control lever (6),
the system (100) being **characterised in that**:
- the lock (4) is movable in translation between its first and second positions,
- the control lever (6) is movable in translation according to an axis (Y6) which is perpendicular to the axis of translation (X4) of the lock (4),
- the lock (4) is equipped with at least one cam (48) and the control lever (6) is equipped with at least one complementary cam (66) supported on the cam of the lock, and
- translation of the lever (6) between its first and second positions causes translation of the lock (4) between its first and second positions.

2. System (100) according to claim 1, **characterised in that** it further comprises a latch (8) which is controlled by a key (80) and can be switched between a first position of blocking the locking device (2) and a second position of releasing the locking device.

3. System (100) according to claim 2, **characterised in that** it comprises a third switch (28) of an electronic card (14) for controlling the electric power circuit (11), the third switch being configured to switch the electronic card between an activation configuration and an inhibition configuration according to the position of the latch (8).

4. System (100) according to claim 2 or 3, **characterised in that**, in its first blocking position, the latch (8) prevents the control lever (6) and the lock (4) from being displaced, the lock (4) being blocked in its first locking position.

5. System (100) according to any one of the preceding claims, **characterised in that** the lock (4) is configured to be displaced from its first position to its second position by the male socket (15).

6. System (100) according to any one of the preceding claims, **characterised in that** the locking device (2) comprises at least one spring (21A, 21B) configured to displace the lock (4) from its second position to its first position.

7. Charging installation (1) for an electric vehicle, comprising a charging port (10) which includes an electric power circuit (11) and a coupling system (100) between a male socket (15) and a female socket (12), **characterised in that** the connecting system (100) is in accordance with any one of the preceding claims.
